# EUROPÄISCHE PATENTSCHRIFT

(11) **EP 0 424 483 B1**
(45) Veröffentlichungstag und Bekanntmachung des Hinweises auf die Patenterteilung: **28.07.1993**
(21) Anmeldenummer: 90904828.2
(22) Anmeldetag: 24.03.1990
(51) Int. Cl.: G01L 19/06

(54) **DRUCKSENSOR**
PRESSURE SENSOR
CAPTEUR DE PRESSION

(30) Priorität: 13.04.1989 DE 3912217
(43) Veröffentlichungstag der Anmeldung: 02.05.1991
(73) Patentinhaber: ENDRESS U. HAUSER GMBH U. CO., D-79689 Maulburg (DE)
(72) Erfinder: HEGNER, Frank, D-7864 Maulburg (DE); FRANK, Manfred, D-7864 Maulburg (DE)
(74) Vertreter: Morstadt, Volker, Dipl.-Ing.
(86) Internationale Anmeldenummer: EP9000481
(87) Internationale Veröffentlichungsnummer: WO9012300

(56) Entgegenhaltungen:
- WO-A-88/01049
- US-A- 3 753 196
- US-A- 4 737 756

## Beschreibung

Bei Drucksensoren besteht die Membran vorzugsweise aus einem preiswerten Federmaterial, das sich für eine wirtschaftliche Massenfertigung eignet, wie Keramik, Glas, Quarz, einkristallinem Material oder auch aus unedlen Metallen. Als besonders günstig hat es sich erwiesen, die Membran aus einer Oxidkeramik, insbesondere aus Aluminiumoxidkeramik, herzustellen. An die verwendeten Membranmaterialien werden in verschiedener Hinsicht sehr unterschiedliche Anforderungen gestellt, die insbesondere die folgenden Gesichtspunkte betreffen:
1. die gewünschten Federeigenschaften, wie Kriechfestigkeit, Freiheit von Hysterese usw.;
2. die für das Verbinden der Membran mit dem Grundkörper angewendete Fügetechnik, wie Löten, Schweißen, Verschmelzen durch Glassfritte oder dgl.;
3. die Widerstandsfähigkeit gegenüber Einwirkungen des Mediums, dessen Druck gemessen werden soll, insbesondere Korrosions- und Abrasionsfestigkeit.

Es gibt praktisch kein Membranmaterial, mit dem alle diese Anforderungen zugleich erfüllt werden können. Je nach den auf den verschiedenen Anwendungsgebieten vorherrschenden Anforderungen müssen daher Drucksensoren mit unterschiedlichen Membranmaterialien bereitgestellt werden, was die Fertigung und Lagerhaltung verteuert. Dabei müssen hinsichtlich der übrigen Anforderungen meist Kompromisse in Kauf genommen werden.

Aufgabe der Erfindung ist die Schaffung eines Drucksensors mit einer Membran aus Keramik, die eine hohe Widerstandsfähigkeit gegenüber Einwirkungen des Meßmediums, insbesondere gegen Korrosion und Abrasion aufweist.

Dies wird durch einen Drucksensor mit dem folgenden Aufbau erreicht:

Drucksensor mit einer Membran, die
- aus einem Material mit sehr rauher Oberfläche, nämlich aus Keramik, besteht,
- im Umfangsbereich unter Bildung einer Kammer mit einem Grundkörper verbunden ist und
- deren vom Grundkörper abgewandte Fläche
   -- einem Medium ausgesetzt ist, dessen Druck gemessen werden soll, sowie
   -- mit einer dünnen, durch chemische Gasphasenabscheidung aufgebrachten Schicht aus Siliciumkarbid versehen ist.

In der WO-A 88/01049 ist bei Drucksensoren mit einer Membran aus Halbleitermaterial zwar schon angegeben, die Membran auf der mit dem Meßmedium in Berührung kommenden Seite mit einer inerten Schutzschicht gegen Korrosion zu versehen, die u.a. aus Siliciumdioxid oder Siliciumnitrid bestehen kann; Siliciumkarbid ist allerdings nicht genannt.

Die bei der Erfindung durch chemische Gasphasenabscheidung aufgebrachte Siliciumkarbidschicht ist sowohl gegen Korrosion als auch gegen Abrasion sehr beständig Sie wirkt somit zugleich als Korrosions- und als Abrasionsschutzschicht, die verhindert, daß ein chemisch oder mechanisch aggressives Medium mit der Keramik der Membran in Berührung kommt.

Für die Korrosions- und Abrasionsschutzschicht aus Siliciumkarbid genügt eine Schichtdicke von etwa 1 bis 10 µm. Siliciumkarbidschichten dieser Dicke können schnell, preiswert und gut reproduzierbar dadurch gebildet werden, daß die Oberfläche der Membran durch chemische Gasphasenabscheidung mit Siliciumkarbid beschichtet wird. Dieses Verfahren ist als CVD-Technik ("Chemical Vapor Deposition") allgemein bekannt und eignet sich besonders gut für eine wirtschaftliche Massenfertigung. Bei der seit längerem bekannten CVD-Technik zur Abscheidung von Siliciumkarbid müssen Temperaturen von etwa 1000°C angewendet werden während die seit neuerer Zeit verfügbare PECVD-Technik ("Plasma Enhanced Chemical Vapor Deposition") die Abscheidung von Siliciumkarbid bei wesentlich niedrigen Temperaturen von etwa 100°C bis 200°C ermöglicht. Bei der Anwendung der PECVD-Technik kann die Beschichtung der Membran erst nach dem Fügen vorgenommen werden.

In jedem Fall ergibt die chemische Gasphasenabscheidung auf der Membran seht gut haftende Siliciumkarbidschichten hoher Elastizität und geringer Biegesteifigkeit, die keine oder allenfalls nur sehr geringe Eigenspannungen aufweisen. Die Rückwirkungen der Siliciumkarbidschicht auf die Membran sind daher vernachlässigbar.

Ein wesentlicher Vorteil des Aufbringens der Siliciumkarbidschicht durch chemische Gasphasenabscheidung besteht darin, daß auch bei sehr rauhen Oberflächen eine sehr dichte Beschichtung erzielt wird, so daß die Siliciumkarbidschicht frei von Mikrorissen und Fehlstellen ist. Auf diese Weise können daher auch die rauhen Oberflächen von Keramikmembranen beschichtet werden, ohne daß diese vorher poliert werden müssen.

Da Siliciumkarbid ein Halbleiter ist, kann die auf die Membran aufgebrachte Siliciumkarbidschicht durch geeignete Dotierug elektrisch leitend gemacht werden, Sie kann dann zusätzlich als elektrostatische Abschirmung verwendet werden.

Vorteilhafte Ausgestaltungen und Weiterbildungen der Erfindung sind in den Unteransprüchen gekennzeichnet.

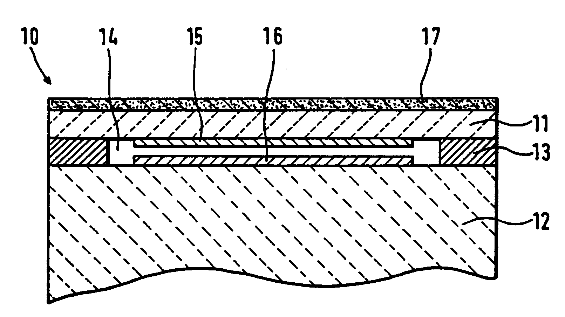

Weitere Merkmale und Vorteile der Erfindung ergeben sich aus der folgenden Beschreibung eines Ausführungsbeispiels anhand der Zeichnung. Die einzige Figur der Zeichnung zeigt einen Schnitt durch einen nach der Erfindung ausgebildeten Drucksensor.

Der in der Zeichnung dargestellte Drucksensor 10 hat eine Membran 11 in Form einer kreisrunden Scheibe mit planparallelen Flächen, die rings um den Umfang mit einem kreisrunden Grundkörper 12 durch ein Verbindungsmittel 13 zusammengefügt ist. Das Verbindungsmittel 13 hält die Membran 11 in einem definierten Abstand vom Grundkörper 12, so daß zwischen den einander zugewandten Flächen der Membran 11 und des Grundkörpers 12 eine Kammer 14 gebildet ist. Die Membran 11 besteht aus Keramik. Der Grundkörper 12 kann ebenfalls aus Keramik oder aus Glas, Quarz, Metall oder einem einkristallinen Material, wie einem Silicium-Einkristall, bestehen. Bevorzugte Materialien für die Membran 11 und den Grundkörper 12 sind Oxidkeramiken, insbesondere Aluminiumoxidkeramik. Das Verbindungsmittel 13 ist so gewählt, daß es sowohl mit dem Material der Membran 11 als auch mit dem Material des Grundkörpers 12 eine festhaftende und dichte Verbindung ergibt. Die Membran 11 ist elastisch, so daß sie sich unter einem darauf einwirkenden Druck verformen kann. Der Grundkörper 12 kann massiv und starr sein, er kann aber auch, falls erwünscht, in gleicher Weise wie die Membran 11 als flache elastische Scheibe ausgebildet sein.

Auf die einander zugewandten Flächen der Membran 11 und des Grundkörpers 12 sind innerhalb der Kammer 14 kreisförmige Leiterschichten 15 bzw. 16 aus Metall aufgebracht, die sich im Abstand gegenüberliegen. Die beiden Leiterschichten 15 und 16 bilden die Elektroden eines Kondensators, dessen Kapazität von dem Abstand zwischen den Leiterschichten abhängt. Sie sind durch nicht dargestellte Verbindungsleiter mit einer elektronischen Schaltung verbunden, die ein elektrisches Meßwertsignal erzeugt, das von der Kapazität zwischen den beiden Elektroden 15 und 16 abhängt.

Im Betrieb ist der Drucksensor 10 so eingebaut, daß nur die dem Grundkörper 12 abgewandte Fläche der Membran 11 einem Medium ausgesetzt ist, dessen Druck gemessen werden soll. Die Membran 11 wird in Abhängigkeit von dem Druck des Mediums verformt, wodurch sich der Abstand zwischen den Leiterschichten 15 und 16 und damit die Kapazität des Drucksensors 10 ändert. Somit ist das von der angeschlossenen elektronischen Schaltung erzeugte Meßwertsignal ein Maß für den Druck des Mediums.

Auf die dem Grundkörper 12 abgewandte Fläche der Membran 11, die dem Medium ausgesetzt ist, dessen Druck gemessen werden soll, ist eine dünne Schicht 17 aus Siliciumkarbid SiC aufgebracht. Die Dicke der Schicht 17 beträgt etwa 1 bis 10 µm; sie ist der Deutlichkeit wegen in der Zeichnung übertrieben groß dargestellt.

Die Siliciumkarbidschicht 17 ist korrosionsfest gegen Säuren, Laugen und Lösungsmittel sowie mechanisch hart und abriebfest. Sie wirkt daher als Korrosions- und Abrasionsschutzschicht gegenüber chemisch oder mechanisch aggressiven Medien. Der Drucksensor 10 kann somit auch zum Messen des Drucks von Medien verwendet werden, die chemisch oder mechanisch aggressiv sind, selbst wenn die Membran 11 gegenüber solchen Medien nicht beständig ist.

Ein bevorzugtes Verfahren für das Aufbringen der Siliciumkarbidschicht 17 ist die chemische Gasphasenabscheidung, allgemein bekannt als CVD-Technik ("Chemical Vapor Deposition"). Mit diesem Verfahren können dünne Siliciumkarbidschichten schnell, preiswert und gut reproduzierbar aufgebracht werden. Da beim Abscheiden von Siliciumkarbid nach der normalen CVD-Technik eine Temperatur von etwa 1000°C angewendet werden muß, können damit Membranen aus Keramik, insbesondere Oxidkeramik, beschichtet werden. Mit der sogenannten PECVD-Technik ("Plasma Enhanced Chemical Vapor Deposition") können dagegen Siliciumkarbidschichten bei wesentlich niedrigeren Temperaturen von etwa 100°C bis 200°C abgeschieden werden.

Sowohl mit der CVD-Technik als auch mit der PECVD-Technik werden sehr festhaftende und dichte Siliciumkarbidschichten ohne Mikrorisse und Fehlstellen auch auf sehr rauhen Oberflächen erhalten. Da Keramikoberflächen, wenn sie nicht poliert sind, sehr rauh sind, eignen sich diese Verfahren hervorragend für das Aufbringen der Siliciumkarbidschicht 17 auf eine Membran 11 aus Keramik, ohne daß es erforderlich ist, die zu beschichtende Fläche zuvor in einem besonderen Arbeitsgang zu polieren.

Die auf die Membran 11 aufgebrachte Siliciumkarbidschicht 17 zeichnet sich durch eine hohe Elastizität und eine geringe Biegesteifigkeit aus, und sie ist praktisch frei von Eigenspannungen. Ihre Rückwirkung auf die Membran 11 ist daher vernachlässigbar, so daß die Eigenschaften des Drucksensors 10 durch die Siliciumkarbidschicht 17 nicht beeinträchtigt werden.

Falls erwünscht, kann die Siliciumkarbidschicht 17 so dotiert sein, daß sie elektrisch leitfähig ist. Sie kann dann zusätzlich als elektrostatische Abschirmung dienen.

## Patentansprüche

1. Drucksensor (10) mit einer Membran (11), die
- aus einem Material mit sehr rauher Oberfläche, nämlich aus Keramik, besteht,
- im Umfangsbereich unter Bildung einer Kammer (14) mit einem Grundkörper (12) verbunden ist und
- deren vom Grundkörper abgewandte Fläche
-- einem Medium ausgesetzt ist, dessen Druck gemessen werden soll, sowie
-- mit einer dünnen, durch chemische Gasphasenabscheidung aufgebrachten Schicht (17) aus Siliciumkarbid versehen ist.

2. Drucksensor nach Anspruch 1, bei dem die Schicht (17) aus Siliciumkarbid eine Dicke von 1 µm bis 10 µm hat.

3. Drucksensor nach Anspruch 1 oder 2, bei dem die Schicht (17) aus Siliciumkarbid durch Dotieren elektrisch leitfähig gemacht ist.

4. Drucksensor nach einem der Ansprüche 1 bis 3, bei dem die Membran (11) aus Oxidkeramik besteht.

5. Drucksensor nach Anspruch 4, bei dem die Membran (11) aus Aluminiumoxidkeramik besteht.

## Claims

1. A pressure sensor (10) comprising a diaphragm (11)
- which is made of a material having a very rough surface, namely of ceramic,
- which is joined around the periphery to a substrate (12), forming a chamber (14), and
- whose surface remote from the substrate
-- is exposed to a medium whose pressure is to be measured, and
-- is provided with a thin silicon-carbide layer (17) deposited by chemical vapor deposition.

2. A pressure sensor as claimed in claim 1 wherein the silicon-carbide layer (17) has a thickness of about 1 µm to 10 µm.

3. A pressure sensor as claimed in claims 1 or 2 wherein the silicon-carbide layer (17) is made electrically conductive by doping.

4. A pressure sensor as claimed in any one of claims 1 to 3 wherein the diaphragm (11) is made of oxide ceramic.

5. A pressure sensor as claimed in claim 4 wherein the diaphragm (11) is made of alumina ceramic.

## Revendications

1. Capteur de pression (10) comportant une membrane (11),
- qui est réalisée en un matériau à surface très rugueuse, à savoir en céramique,
- qui, dans la zone périphérique, est reliée à un corps de base (12) en formant une chambre (14), et
- dont la surface non dirigée vers le corps de base
-- est exposée à un fluide dont la pression doit être mesurée, et
-- est pourvue d'une mince couche (17) de carbure de silicium appliquée par dépôt chimique en phase vapeur.

2. Capteur de pression selon la revendication 1, dans lequel la couche (17) de carbure de silicium présente une épaisseur de 1 µm à 10 µm.

3. Capteur de pression selon la revendication 1 ou 2, dans lequel la couche (17) de carbure de silicium est rendue électriquement conductrice, par dopage.

4. Capteur de pression selon l'une des revendications 1 à 3, dans lequel la membrane (11) est réalisée en céramique d'oxydes.

5. Capteur de pression selon la revendication 4, dans lequel la membrane (11) est réalisée en céramique d'oxyde d'aluminium.
